# EUROPEAN PATENT APPLICATION

(11) **EP 1 384 746 A1**
(43) Date of publication of application: **28.01.2004**
(21) Application number: 02707204.0
(22) Date of filing: 28.03.2002
(51) Int. Cl.: C08J 5/20, B01J 47/12, B01D 61/48, B01D 69/12, C02F 1/46, C08F 2/32

(54) **COMPOSITE POROUS ION-EXCHANGER, METHOD OF MANUFACTURING THE ION-EXCHANGER, DEIONIZATION MODULE USING THE ION- EXCHANGER, AND ELECTRIC DEIONIZED WATER MANUFACTURING DEVICE**

(30) Priority: 13.04.2001 JP 2001116014
(71) Applicant: Organo Corporation, Tokyo 136-8631 (JP)
(72) Inventor: YAMANAKA, Koji, c/o ORGANO CORPORATION, Tokyo 136-8631 (JP); INOUE, Hiroshi, c/o ORGANO CORPORATION, Tokyo 136-8631 (JP); TAMURA, Makio, c/o ORGANO CORPORATION, Tokyo 136-8631 (JP)
(74) Representative: Herzog, Martin
(86) International application number: PCT/JP2002/003044
(87) International publication number: WO 2002/083770

(57) **Abstract**

A composite ion exchanger with ion exchange groups uniformly dispersed therein, comprising a porous polymer having a continuous pore structure, which comprises interconnected macropores and mesopores existing on the walls of the interconnected macropores, having a total pore volume of 1 to 50 ml/g, and a dense layer covering at least one surface of the porous polymer and integrally formed with the porous polymer. The structure provides a body integrally formed from a material functioning as an ion exchange membrane and a material functioning as an ion exchanger and allows the material functioning as an ion exchanger to have an extremely large pore volume and specific surface area. Electric power saving is possible if the product is used as an electrodeionization module for an electrodeionization water purification device.

## Description

### TECHNICAL FIELD

The present invention relates to a composite porous ion exchanger used in the semiconductor manufacturing industry, the pharmaceutical industry, the food industry, power plants, laboratories and the like, as well as for the manufacture of sugar solutions, juice, wine and the like; a process for manufacturing the composite porous ion exchanger, an. electrodeionization module; and an electrodeionization water purification device equipped with the electrodeionization module.

### BACKGROUND ART

A conventional electrodeionization water purification device has a basic structure of a depletion chamber containing as an ion exchanger an ion exchange resin mixture consisting of an anion exchange resin and a cation exchange resin, packed in a.space between a cation exchange membrane and an anion exchange membrane. Water to be treated is passed through the ion exchange resins and, at the same time, a DC current is applied to the direction perpendicular to the flow of water to be treated via the two ion exchange membranes to electrically remove ions in the water to be treated into concentrate water flowing outside thetwoionexchangemembranes,therebyproducing deionized water. Since this operation electrically removes impurity ions in the water to be treated, deionized water can be continuously produced without regenerating the packed ion exchange resins with chemicals.

Since regeneration using chemicals is unnecessary, the operation cost for the electrodeionization water purification device is determined according to the amount of electric power consumption. If a rectification loss incurred during the conversion of AC current into DC current is excluded, the electric power consumption is equal to the DC current between the electrodes multiplied by voltage. The DC current is determined according to the amount of ions in the water to be treated, the types of ions, and quality required for treated water. In an electrodeionization water purification device, ions adsorbed on ion-exchange resins in the depletion chamber must be continuously discharged to the concentrate water side by electrophoresis. Supply of current sufficient to move ions is essential for an electrodeionization water purification device to properly exhibit its performance. Therefore, a fixed current operation, in which a prescribed level of current above the minimum current value necessary for the operation conditions is maintained, is usually adopted for an electrodeionization water purification device. On the other hand, the voltage is determined by the electric resistance between the electrodes and largely depends on the performance of ion exchange membranes and ion exchange resins used in the electrodeionization water purification device. Specifically, the electric resistance is a sum of the electric resistances of electrode chambers, concentrate chambers, and depletion chambers arranged between the two electrodes. If the distance between the electrodes and the operation temperature are constant, the electric resistance is affected by the concentrations and types of ions contained in the electrode water and concentrate water, the types of ion exchange membranes and ion exchange resins, the types of counter ions of the ion exchange groups, the method of packing the ion exchange resins (single bed or mixed bed), and contact resistances in the interfaces of all these electric resistance components. Among these electric resistance components, the concentrations and types of ions contained in the electrode water and concentrate water are determined by the quality of water to be treated and the quality required for the treated water, with the other electric resistance components depending on the performance of ion exchangers used for the electrodeionization water purification device and the method of using the ion exchangers.

However, ion exchange resins packed in depletion chambers of conventional electrodeionization water purification devices are commonly used general-purpose ion exchange resins. No consideration has been given to minimization of electric resistances to reduce the operation cost for the electrodeionization water purification device. Specifically, conventional electriodeionization water purification devices typically employ spherical ion exchange resins with a diameter of 0.2 to 0.5 mm made from a styrene-divinyl benzene (DVB) copolymer as a matrix resin for ion exchange resins, wherein a sulfonic acid group (R-SO₃⁻H⁺) is introducedas a cation exchange group and a quaternary ammonium group (R-N⁺R₁R₂R₃) is used as an anion exchange group. Current (electrons and ions) is transmitted inside ion-exchange resin particles with a low resistance via ion exchange groups that are uniformly and densely present in polymer gels. In the interface of ion exchange resin particles, on the other hand, the distance over which the ions move in water or over which electrons are transmitted via hydrogen bonds between water molecules is long. In addition, because spherical particles have only a small contact area between the particles, the flow of ions is concentrated in the contactpoints, hindering electron transmission, that is, causing electric resistance. This is amajor cause of electric resistance derived from ion exchange resins.

Moreover, manufacturing of conventional electriodeionization water purification devices require significant time and labor due to the necessity of packing commonly used general-purpose ion exchange resins in depletion chambers. In particular, to assemble an electrodeionization module, moistened ion exchange resins must be uniformly packed while laminating multiplicity layers of sandwich-shaped ends by using an adhesive. Considerable skills are required for the assembly, which is difficult to be automated. Handling of moistened ion-exchange resins is difficult even if an adhesive is not used.

Several methods for solving these problems have been proposed heretofore, which include, for example, a porous ion exchanger having a porous structure in which ion exchange resins are bonded using a binder polymer and provided with specific water permeability (Japanese Patent Applications Laid-open No. 252579/1996, No. 192716/1998, etc.), a depletion chamber structure integrally made by bonding an anion exchanger and a cation exchanger using an adhesive, in which the liquid permeating section and the permeate liquid sealing section have specific structures enabling the omission of frames and ion exchange membranes (Japanese Patent Application Laid-open No. 218137/2000), a simplified structure made from a porous structure formed on the surface of a cation exchange membrane and an anion exchange membrane, wherein the cation exchange membrane and an ion exchange membrane are brought into contact on the surface of the porous structure and pores of the porous structure serve as a path through which treated water passes (Japanese Patent Application Laid-open No. 192491/1999), and the like.

In the case where the porous structure described in the Japanese Patent Application Laid-open No. 252579/1996 is used as a packing material for the depletion chamber, the assembly problems relating to uniform packing of the aforementioned ion exchange resin particles can be solved. However, this porous structure is manufactured by bonding ion exchange resin particles, which have conventionally been packed as such in an electrodeionization module, using a binder polymer and, in some cases, further introducing ion exchange groups into the binder polymer portions. Thus, the manufacturing process of the porous structure requires an additional step, which results in complexity in the manufacture of a packing material for the depletion chamber in return for simplification of the device assembly. In addition, this porous structure does not necessarily exhibit sufficient improvement with regard to reducing high electric resistance due to packing of the ion exchange resin particles. Specifically, in these porous structures, ion exchange groups are not present in the binder polymer portion or, even if present, the structures of the binder polymer matrix and ion exchange groups in the binder polymer portion are different from those in the ion exchange resin portion. In addition, the density of the ion exchange groups in the binder polymer portion is small when compared with that in the ion exchange resin portion. It is thus difficult to make a homogeneous ion exchanger as a whole. For this reason, the aforementioned problem of non-uniform transmission of ions and electrons into packing layers is still to be solved. Electric resistance in the ion exchanger packing layers has not been sufficiently reduced and adsorbed ions are not necessarily efficiently discharged to the concentrate chamber. Moreover, the electrodialysis apparatus described in the Japanese Patent Application Laid-open No. 252579/1996 is also provided with a separately prepared cation exchange membrane and anion exchange membrane on both sides of the porous structure for the depletion chamber. Non-uniform ion exchange membranes prepared from fine particles of ion exchange resin and a suitable binder polymer are also known. A separate ion exchanger must also be packed or inserted when such a non-uniform ion exchange membrane is used in an electrodeionization liquid manufacturing device.

In this manner, all conventional porous ion exchangers are integral structural bodies produced by binding ion exchange resin particles with a binder polymer or are porous structures of which the details have not been specified. These materials have continuous porous structures produced by high dispersion phase emulsion polymerization, which have mesopores functioning as a water path in the walls of mutually connected macropores. No materials having further dense layers have been disclosed. Japanese Patent Publication No. 49563/1992 discloses a porous polymer with increased capability of adsorbing aqueous acids and organic acids, manufactured by high dispersion phase emulsion polymerization. However, the porous polymer is not suitable for deionized water production because the swelling and liquid adsorbing capability of the polymer is too high.

An obj ect of the present invention is to provide a composite porous ion exchanger integrally formed from a material functioning as an ion exchange membrane and a material functioning as an ion exchanger, wherein thematerial functioning as an ion exchanger has an extremely large pore volume and specific surface area, and further to provide a method of manufacturing the composite porous ion exchanger. Another object of the present invention is to provide an electrodeionization module having an easily assembled, simple structure in which the ion exchange membrane need not be sealed. Still another object of the present invention is to provide a power saving electrodeionization water purification device that can be operated at a low voltage to reduce power consumption.

### DISCLOSURE OF THE INVENTION

The present invention provides a composite porous ion exchanger with ion exchange groups uniformly dispersed therein and an ion exchange capacity of 0.5 mg equivalent/g or more on a dry basis, comprising a porous polymer having a continuous pore structure, which comprises interconnected macropores and mesopores with an average diameter of 1 to 1,000 µm existing on the walls of the interconnected macropores, having a total pore volume of 1 to 50 ml/g, and a dense layer covering at least one surface of the porous polymer and integrally formed.with the porous polymer. The structure of the composite porous ion exchanger comprising a dense layer functioning as an ion exchange membrane and a porous polymer functioning as an ion exchanger, integrally formed with the dense layer, is a novel structure quite different from the structure possessed by conventional particle-aggregationtype porous materials. Particularly, the porous polymer can remarkably increase the pore volume and specific surface area while retaining the strength.

The present invention further provides a process for manufacturing a composite porous ion exchanger comprising a step of obtaining a water-in-oil type emulsion by mixing an oil-soluble monomer, not containing ion exchange groups, a surfactant, water, and a polymerization initiator, if necessary, a step of filling the water-in-oil type emulsion in a vessel, of which at least a part of the portion in contact with the water-in-oil type emulsion is made from a hydrophobic material, and polymerizing the water-in-oil type emulsion, and a step of introducing ion exchange groups into the polymer obtained in the previous step. The process permits manufacturing the above composite porous ion exchanger in a simple, easy and stable manner.

The present invention further provides a process for manufacturing a composite porous ion exchanger comprising: a step of obtaining a water-in-oil type emulsion by mixing an oil-soluble monomer, not containing ion exchange groups, a surfactant, water, and apolymerization initiator, if necessary, a step of laminating (a) a layer of the water-in-oil type emulsion or a polymer of the water-in-oil type emulsion and (b) a layer of an oil-soluble monomer, not containing ion exchange groups, containing a polymerization initiator, ifnecessary, orapolymer film of the monomer, a step of polymerizing the laminate of the layers (a) and (b) , and a step of introducing ion exchange groups into the polymer obtained in the previous step. The process permits manufacturing the above composite porous ion exchanger in a simple, easy and stable manner.

The present invention further provides an electrodeionization module used in an electrodeionization water purification device comprising a frame having a cation exchange membrane sealingly attached to the one side of the frame and an anion exchange membrane seal ingly attached to the other side of the frame and a composite porous ion exchanger packed in the space formed by the cation exchange membrane and the anion exchange membrane so that said dense layer and said ion exchange membranes may be in contact with each other. Since the electrodeionization module provides a surface contact between the dense layer and the ion exchange membrane, ions and electrons can be easily transmitted, resulting in a decrease in the electric resistance. In addition, a dense layer with a weak strength can be used.

The present invention further provides an electrodeionization water purification device equipped with the electrodeionization module. This electrodeionization water purification device can be operated at a low voltage and, therefore, can be used as a power saving type unit by which power consumption can be reduced.

### BRIEF DESCRIPTION OF THE DRAWINGS

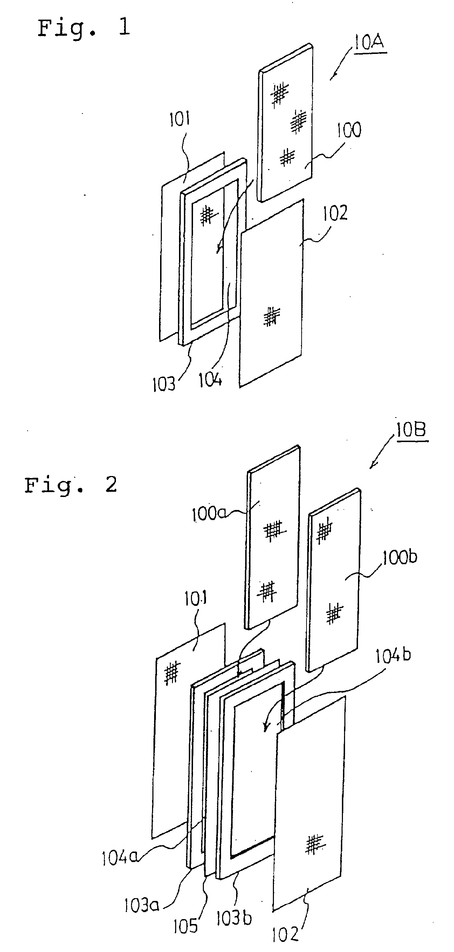

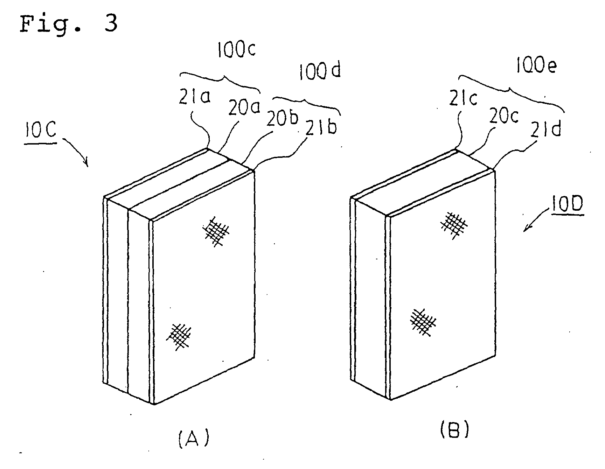

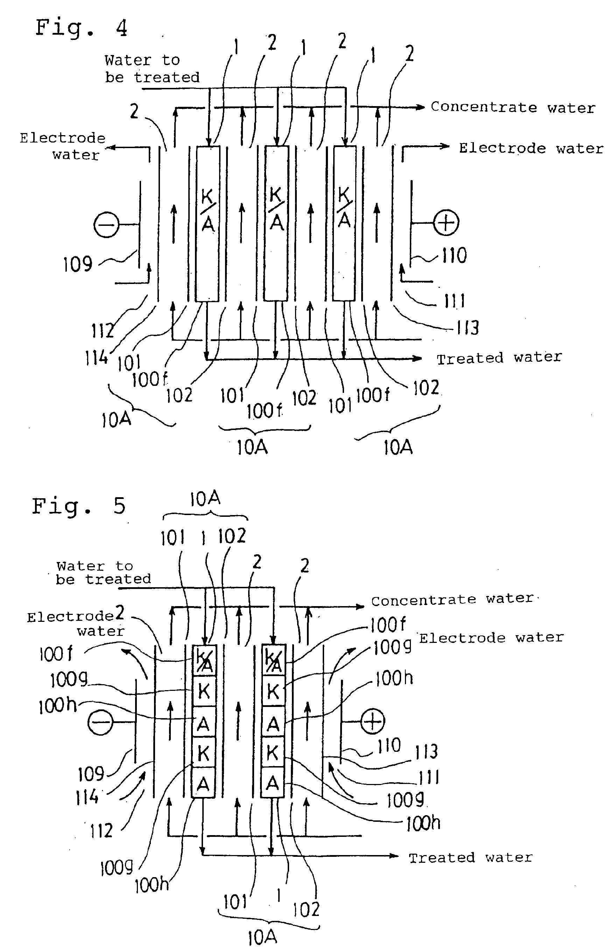

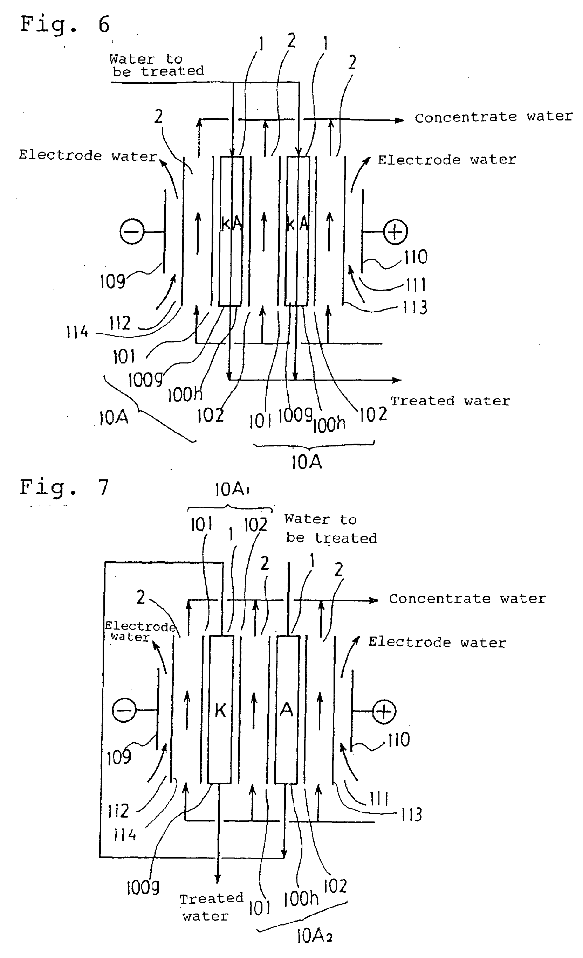

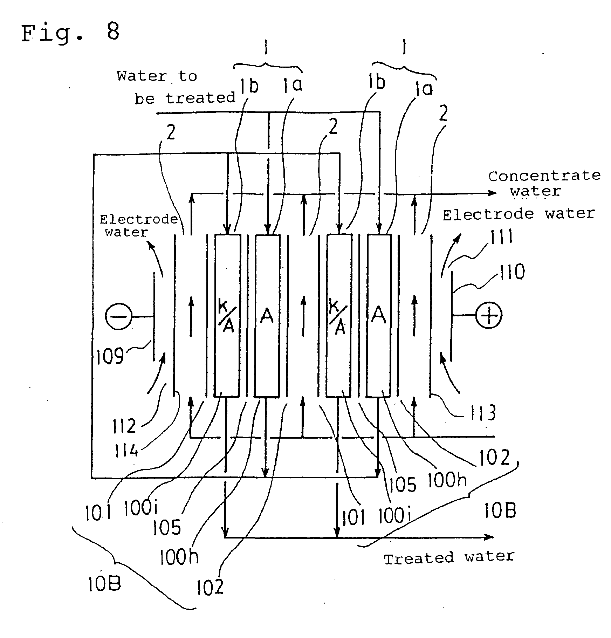

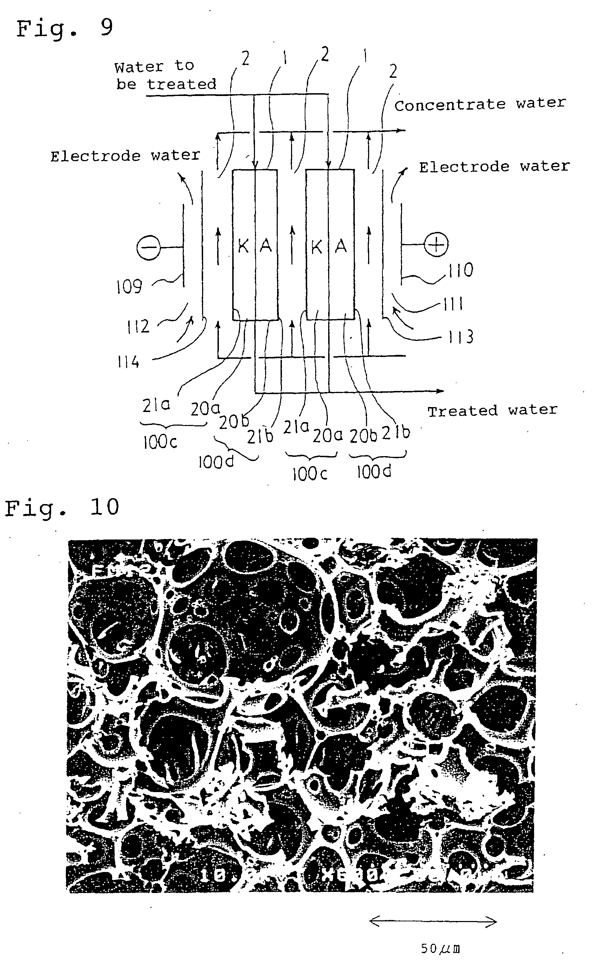

Fig. 1 is a schematic drawing describing an electrodeionization module of the present invention. Fig. 2 is a schematic drawing describing another electrodeionization module of the present invention. Fig. 3 is a schematic drawing describing still another electrodeionization module of the present invention. Fig. 4 is a schematic drawing describing an electrodeionization water purification device of the present invention. Fig. 5 is a schematic drawing describing another electrodeionization water purification device of the present invention. Fig. 6 is a schematic drawing describing still another electrodeionization water purification device of the present invention. Fig. 7 is a schematic drawing describing still a further electrodeionization water purification device of the present invention. Fig. 8 is a schematic drawing describing still a still further electrodeionization water purification device of the present invention. Fig. 9 is a schematic drawing describing still a still further electrodeionization water purification device of the present invention. Fig. 10 is an SEM photograph of the composite porous ion exchanger obtained in the Example.

### BEST MODE FOR CARRYING OUT THE INVENTION

The basic structure of the composite porous ion exchanger of the present invention comprises a porous polymer and a dense layer, wherein the dense layer is coated on at least one surface of the porous polymer and formed integrally with the porous polymer. The porous polymer has a continuous pore structure which comprises interconnected macropores and mesopores with an average diameter of 1 to 1, 000 µm, preferably 10 to 100 µm, existing on the walls of the interconnected macropores. The continuous pore structure usually includes a structure in which macropores with an average diameter of 2 to 5,000 µm are layered. The layered section has mesopores functioning as common openings, most of the mesopores having an open pore structure. In the open pore structure, pores formed from the macropores and mesopores become flow paths when water is caused to flow. The layered macropores usually have 1 to 12 layered sections per one macropore, and many of the layered macropores have 3 to 10 layered sections per one macropore. If the average diameter of mesopores is less than 1 µm, pressure loss during water passage is too large when the product is used for water treatment. The average diameter of mesopores more than 1,000 µm results in an impaired deionization efficiency. The above-described continuous pore structure of the porous polymer ensures uniform formation of macropore groups and mesopore groups and, at the same time, remarkably increases the pore volume and specific surface area as compared with particle-aggregation type porous materials described in Japanese Patent Application Laid-open No. 252579/1996 and the like. Therefore, such a porous polymer is very advantageously used as an ion exchanger for an electrodeionization water purification device due to outstanding improvement on the deionization efficiency.

The total pore volume of the porous polymer is 1 to 50 ml/g. If the total pore volume is less than 1 ml/g, the amount of water permeating through a unit area becomes small, resulting in low treatment capacity. A total pore volume of more than 50 ml/g is undesirable because the proportion occupied by the polymer forming a skeleton decreases, resulting in unduly impaired physical strength. The total pore volume of conventional porous ion exchangers is in the range of 0.1 to 0.9 ml/g at most. In the present invention, materials having a greater total pore volume in the range of 1 to 50 ml/g, as well as a larger specific surface area, can be used. The water flux rate of the porous polymer is preferably 100 to 100,000 ml/min·m²·MPa or more when the thickness is 10 mm. If the water flux rate is in this range, the porous material has both an excellent strength and a good deionization efficiency when the porous polymer is used as the ion exchanger for an electrodeionization water purification device. An organic polymer material having a crosslinking structure is used as the polymer of skeleton parts that form the continuous pores. Such a polymer preferably contains crosslinking structural units in an amount of 10 to 90 mol% of the total amount of all structural units forming the polymer material. If the amount of the crosslinking structural units is less than 10 mol%, the mechanical strength is insufficient. If the amount is more than 90 mol%, it is difficult to introduce ion exchange groups, resulting in a product with an insufficient ion exchange capacity. There are no specific limitations to the type of polymer material. Examples include styrene-type polymers such as polystyrene, poly(α-methylstyrene), and poly(vinyl benzyl chloride); polyolefins such as polyethylene and polypropylene; poly(halogenated olefin) such as polyvinyl chloride and polytetrafluoroethylene; nitrile polymers such as polyacrylonitrile; (meth)acrylic polymers such as poly(methyl methacrylate) and poly(ethylacrylate); styrene-divinylbenzene copolymer, vinyl benzyl chloride - divinylbenzene copolymer, and the like. The above polymers maybe either homopolymers obtained by the polymerization of one type of monomer or copolymers obtained by the polymerization of two or more types of monomers. In addition, a blend of two or more types of polymers may be used. Among these organic polymers, styrene-divinylbenzene copolymer and vinyl benzyl chloride-divinylbenzene copolymer are preferable in view of ease of introduction of ion exchange groups and high mechanical strength. The continuous pore structure of the composite porous ion exchanger of the present invention can be observed by using a scanning electron microscope (SEM).

The dense layer is coated on at least one surface of the porous polymer and is integrally formed with the porous polymer. Specific embodiments of plate-like materials include a bilayer material consisting of a dense layer and a porous polymer layer, a three-layer material consisting of two dense layers and a porous polymer layer disposed therebetween. Here, the dense layer indicates a layer without holes having a diameter of 10 nm or more in the same manner as in common ion exchange membranes. The thickness of the dense layer can be appropriately determined according to the use conditions without specific limitations. The dense layer has a structure organizationally continuous with the polymer in the skeleton forming the continuous pores. Therefore, the dense layer is made from the same polymer as that forming the skeleton of the porous polymer. The continuous pore structure and dense layer of the porous polymer of the present invention can be observed comparatively easily by using a scanning electron microscope (SEM).

The composite porous ion exchanger of the present invention contains uniformly dispersed ion exchange groups and has an ion exchange capacity of 0.5 mg equivalent/g or more, and preferably 2.0 mg equivalent/g or more, on dry a basis. If the ion exchange capacity is less than 0.5 mg equivalent/g of composite porous ion exchanger on a dry basis, the deionization efficiency is decreased. If the distribution of ion exchange groups is not uniform, transmission of ions and electrons in the composite porous ion exchanger becomes non-uniform, resulting in problems such as an inefficient reduction of electric resistance and difficulty in efficient discharge of adsorbed ions to a depletion chamber. The term "uniform distribution of ion exchange groups" herein indicates uniformity of ion exchange group distribution on the order of µm or less. Distribution conditions of ion exchange groups can be identified comparatively easily by using an analytical technique such as EPMA, SIMS, or the like. As ion exchange groups to be introduced into the composite porous ion exchanger, cationic exchange groups such as a carboxylic acid group, iminodiacetic acid group, sulfonic acid group, phosphoric acid group, and phosphate group; anionic exchange groups such as a quaternary ammonium group, tertiary amino group, secondaryaminogroup, primary amino group, polyethylene imine group, tertiary sulfonium group, and phosphonium group; amphoteric ion exchange groups such as an amino phosphoric acid group, betaine, and sulfobetaine; and the like can be cited.

The structure of the composite ion exchanger of the present invention, comprising a dense layer functioning as an ion exchange membrane and a porous polymer functioning as an ion exchanger, integrally formed with the dense layer, is a novel structure quite different from the structure possessed by conventional particle-aggregation type porous materials. Particularly, the porous polymer can remarkably increase the pore volume and specific surface area while retaining the strength.

The following processes can be cited as examples of the process for manufacturing the composite porous ion exchanger of the present invention: a process ("process 1") comprising a step of obtaining a water-in-oil type emulsion by mixing an oil-soluble monomer, not containing ion exchange groups, a surfactant, water, and a polymerization initiator, if necessary (hereinafter referred to also as "water-in-oil type emulsion forming step") , a step of filling the water-in-oil type emulsion in a vessel, of which at least a part of the portion in contact with the water-in-oil type emulsion is made from a hydrophobic material, and polymerizing the water-in-oil type emulsion (hereinafter referred to also as "polymerization step (1)"), and a step of introducing ion exchange groups into the polymer obtained in the previous step (hereinafter referred to also as "ion exchange group introduction step") and a process ("process 2") comprising a step of obtaining a water-in-oil type emulsion by mixing an oil-soluble monomer, not containing ion exchange groups, a surfactant, water, and a polymerization initiator, if necessary, a step of laminating (a) a water-in-oil type emulsion layer or a polymer of the water-in-oil type emulsion and (b) anoil-solublemonomer layer, not containing ion exchange groups, containing a polymerization initiator, if necessary, or a polymer film of the oil-soluble monomer, and polymerizing the laminate of the layers (a) and (b) (hereinafter referred to as ("polymerization step (2) ") and a step of introducing ion exchange groups into the polymer obtained in the previous step. The process 1 is a simpler method, in which the polymerization step can be carried out in a vessel formed from a hydrophobic material. The process 2 maybe carried out using apolymerization vessel formed either from a hydrophilic material or a hydrophobic material. Not only is the material for the vessel unlimited, but also the process is effective due to its capability of uniformly forming dense layers with an arbitrary thickness without producing pinholes.

The process 1 will now be described in more detail. The oil-soluble monomer not containing an ion exchange group used in the water-in-oil type emulsion forming step indicates a lipophilic monomer having low solubility in water, which does not contain an ion exchange group such as a carboxylic acid group, sulfonic acid group, or quaternary ammonium group. Specific examples of such a monomer include styrene, α-methylstyrene, vinyl toluene, vinyl benzyl chloride, divinylbenzene, ethylene, propylene, isobutene, butadiene, isoprene, chloroprene, vinyl chloride, vinyl bromide, vinylidene chloride, tetrafluoro ethylene, acrylonitrile, methacrylonitrile, vinyl acetate, methyl acrylate, ethyl acrylate, butyl acrylate, 2-ethylhexyl acrylate, trimethylolpropane triacrylate, butanediol diacrylate, methyl methacrylate, ethyl methacrylate, propyl methacrylate, butyl methacrylate, 2-ethylhexyl methacrylate, cyclohexyl methacrylate, benzyl methacrylate, glycidyl methacrylate, and ethylene glycol dimethacrylate. These monomers may be used either individually or in combination of two or more. However, to obtain necessary mechanical strength in the later step of introducing as many ion exchange groups as possible, it is desirable to select at least one monomer from crosslinking monomers, such as divinylbenzene and ethylene glycol dimethacrylate, as a component of the oil - soluble monomers, and incorporate such a monomer in an amount of 10 to 90 mol%, preferably 12 to 80 mol% of the total amount of oil-soluble monomers.

There are no specific limitations to the types of surfactant used in the water-in-oil type emulsion forming step inasmuch as a water-in-oil (w/o) type emulsion can be formed when the oil - soluble monomer not containing an ion exchange group and water are mixed. Examples of the surfactants include nonionic surfactants such as sorbitan monooleate, sorbitan monolaurate, sorbitan monopalmitate, sorbitan monostearate, sorbitan trioleate, polyoxyethylene nonylphenyl ether, polyoxyethylene stearyl ether, and polyoxyethylene sorbitan monooleate; anionic surfactants such as potassium oleate, sodium dodecylbenzenesulfonate, and dioctyl sodium sulfosuccinate; cationic surfactants such as distearyldimethyl ammonium chloride; and ampholytic surfactants such as lauryldimethyl betaine. These surfactants may be used either individually or in combination of two or more. The water-in-oil type emulsion means an emulsion having a continuous oil phase in which water droplets are dispersed. Although the amount of the above surfactants to be added significantly varies according to the type of oil-soluble monomers and the size of target emulsion particles (macropores), a specific amount can be selected from the range from about 2% to 70% of the total amount of the oil-soluble monomers and surfactants. In addition, although not necessarily essential, alcohols such as methanol and stearyl alcohol, carboxylic acids such as stearic acid, or hydrocarbons such as octane and dodecane may be added to control the shape and size of pores of the porous polymer.

A compound that generates radicals by heat or light is suitably used as the polymerization initiator which is used, if necessary, in the water-in-oil type emulsion forming step. The polymerization initiator may be either water-soluble or oil-soluble. Examples of the polymerization initiator include azobisisobutyronitrile, azobiscyclohexanenitrile, azobiscyclohexanecarbonitrile, benzoyl peroxide, potassium persulfate, ammonium persulfate, hydrogen peroxide-iron chloride, sodium persulfate-acidic sodium sulfite, tetramethylthiuram disulfide, and the like. In some reaction systems, polymerization proceeds only by heat or light without the addition of a polymerization initiator. In such a case, the polymerization initiator need not be added.

There are no specific limitations to the method of mixing the oil-soluble monomer not containing an ion exchange group, surfactant, water, and polymerization initiator to prepare a water-in-oil type emulsion. Amethod of mixing these components all together, a method of preparing a mixture of oil-soluble components, which include oil-soluble monomer, a surfactant, and oil-soluble polymerization initiator, and a solution of aqueous components, which includes water and water-soluble polymerization initiator, and mixing the mixture and solution, and other similar methods can be used. There are also no specific limitations to the mixing apparatus for forming the emulsion. A suitable apparatus for obtaining emulsion having a target particle size can be selected from among conventional mixers, homogenizers, and high-pressure homogenizers. There are also no specific limitations to the mixing conditions. A rate of rotation and stirring time can be arbitrarily determined so that the emulsion having a target particle size can be obtained.

The water-in-oil type emulsion obtained in this manner is filled in a vessel, of which at least a part of the portion in contact with the water-in-oil type emulsion is made from a hydrophobic material. Preferably, after allowing the water-in-oil type emulsion to stand in the vessel, a continuous membrane of the oil-soluble monomer is formed on the surface of the hydrophobic material. Then, the monomer is polymerized. A composite porous ion exchanger with a dense layer formed in the part in contact with the hydrophobic material can be obtained in this manner. The hydrophobic material herein indicates a material having only a small affinity with water, with a surface tension of about 40 mN/m or less, preferably about 30 mN/m or less, and still more preferably about 25 mN/m or less at 20ºC. As examples of such a hydrophobic material, polyethylene, polypropylene, polyisobutene, polyisoprene, poly(4-methyl -1-pentene), polystyrene, polytetrafluoroethylene, polyhexafluoropropylene, polytrifluoroethylene, polydimethyl siloxane, and the like can be cited. Of these, fluorine-containing polymers represented by polytetrafluoroethylene are suitable from the viewpoint of oil resistance, chemical resistance, heat resistance, and mechanical strength.

As a vessel formed from the hydrophobic material used in the polymerization process (1) , a vessel made only from any the above hydrophobic material and a vessel with the above hydrophobic material laminated or coated over the metal, glass, or ceramic forming the internal surface of the wall of the vessel can be cited. For example, in the case of a plate material with a bilayer structure consisting of a dense layer and a porous polymer, a plate-like vessel of which the planar bottom surface is formed from a hydrophobic material can be used. In the case of a plate material with a three-layered structure consisting of a porous polymer sandwiched by two dense layers on both sides, a vessel with a height or a width equivalent to the thickness of the plate material, of which the internal surface is formed from a hydrophobic material, can be used. The reason why a composite porous ion exchanger, of which at least part of the surface is covered with a dense layer, can be obtained by polymerizing the water-in-oil type emulsion is that when the water-in-oil type emulsion is brought into contact with the surface of the vessel, the oil phase in the water-in-oil type emulsion is adsorbed onto the surface of the vessel made from a hydrophobic material, whereby a continuous layer mainly made of the oil-soluble monomer is formed over the area with which the water-in-oil type emulsion comes into contact.

Various polymerization conditions can be selected for polymerizing the water-in-oil type emulsion according to the type of monomer and polymerizationinitiator. For example,when azobisisobutyronitrile,benzoylperoxide,potassium persulfate, or the like is used as the polymerization initiator, the emulsion may be polymerized with heating at 30 to 100°C for 1 to 48 hours in a sealed vessel under an inert gas atmosphere. When hydrogen peroxide-iron chloride, sodium persulfate-acidic sodium sulfite, or the like is used as the polymerization initiator, the emulsion may be polymerized at 0 to 30°C for 1 to 48 hours in a sealed vessel under an inert gas atmosphere. Although there is no specific limitation to the polymerization conversion rate of the oil-soluble monomers in the polymerization step (1), a conversion rate of about 70% or more is preferable to maintain the shape of the composite porous material stable. After the polymerization, the reaction mixture is removed from the vessel, extracted with a solvent such as isopropanol or the like using a Soxhlet extractor to eliminate unreacted monomers and residual surfactants, and dried to obtain a composite porous material, of which at least part of the surface is covered with a dense layer.

As a method for introducing ion exchange groups into the composite porous material obtained in the polymerization step (1) , known methods can be used without any specific limitations. For example, as a method of introducing a sulfonic acid group, when the porous material is a styrene-divinylbenzene copolymer or the like, a method of sulfonation using chlorosulfuric acid, concentrated sulfuric acid, or fuming sulfuric acid; a method of introducing a radical initiation group or chain transfer group to the porous material and grafting sodium styrene sulfonate or acrylamide-2-methylpropane sulfonic acid; a method of introducing a sulfonic acid group by functional group conversion after graft polymerization of glycidyl methacrylate with the porous material; and the like can be given. As a method of introducing a quaternary ammonium group when the porous material is a styrene-divinylbenzene copolymer or the like, a method of introducing a chloromethyl group using chloromethyl methyl ether or the like and reacting the resulting product with a tertiary amine; a method of preparing the porous material by the copolymerization of chloromethyl styrene and divinylbenzene, and then reacting the copolymer with a tertiary amine; a method of introducing a radical initiation group or chain transfer group to the porous material and grafting N,N,N-trimethylammonium ethyl acrylate or N,N,N-trimethylammonium propyl acrylamide; a method of introducing the quaternary ammonium group by functional group conversion after graft polymerization of glycidyl methacrylate with an organic porous material; and the like can be given. As a method of introducing a betaine, a method of introducing a tertiary amine to the porous material by the method described above and then reacting the resulting product with mono-iodoacetic acid and the like can be cited. As ion exchange groups to be introduced, cationic exchange groups such as a carboxylic acid group, iminodiacetic acid group, sulfonic acid group, phosphoric acid group, and phosphate group; anionic exchange groups such as a quaternary ammonium group, tertiary amino group, secondary amino group, primary amino group, polyethylene imine group, tertiary sulfonium group, and phosphonium group; ampholytic ion exchange groups such as a betaine and sulfobetaine; and the like can be cited. Either ion exchange groups with the same polarity or ion exchange groups with different polarities maybe introduced into the dense layer and porous polymer forming the composite porous ion exchanger.

The process 2 will now be described in more detail. Since the water-in-oil type emulsion forming step and the ion exchange group introducing step of the process 2 are the same as those in the process 1, description for these steps are omitted and the polymerization step (2) , which is a different step employed in the process 1, will be described. The polymerization step (2) is a step of laminating (a) a layer of the water-in-oil type emulsion obtained in the water- in-oil type emulsion forming step or a polymer of the water-in-oil type emulsion and (b) a layer of an oil-soluble monomer, not containing ion exchange groups, containingapolymerizationinitiator, ifnecessary, orapolymer film of the monomer (herein after referred to also as "oil-soluble monomer"), and polymerizing the laminate of the layers (a) and (b). Specifically, there are following four methods for carrying out thepolymerization step 2: a first method comprising laminating the water-in-oil type emulsion layer (a1) and the oil-soluble monomer layer (b1) and polymerizing (a1) and (b1) ; a second method comprising laminating the water-in-oil type emulsion layer (a1) and the polymer film of the oil-soluble monomer layer (b2) and polymerizing (a1) and (b2) ; a third method comprising laminating the polymer of the water-in-oil type emulsion layer (a2) and the oil-soluble monomer layer (b1) and polymerizing (a2) and (b1); and a fourth method comprising laminating the polymer of the water-in-oil type emulsion layer (a2) and the polymer film of the oil-soluble monomer layer (b2) and polymerizing (a2) and (b2). Of these, the second method and third method are preferable in view of the high adhesiveness of the dense layer and porous polymer formed after the polymerization and easy control of the thickness of the dense layer. In addition, it is desirable for the polymer of the water-in-oil type emulsion layer (a2) and the polymer film of the oil-soluble monomer layer (b2) to be impregnated with an oil-soluble monomer not containing ion exchange groups to increase the adhesion between the two.

The water-in-oil type emulsion layer (a1) used in the first method and the second method may be a water-in-oil type' emulsion filled in a polymerization vessel with a prescribed configuration, for example. The polymer of water-in-oil type emulsion layer (a2) used in the second method and the fourth method may be a polymer obtained by polymerizing the water- in-oil type emulsion in the same manner as in the above - described process 1 except that there are no limitations to the material of construction for the polymerization vessel. The polymerization conversion rate of 50% or more is sufficient for the polymerization of the oil-soluble monomer when producing the polymer (a2) by polymerizing the water-in-oil type emulsion layer. Either a vessel made from a hydrophobic material or a vessel made from a hydrophilic material may be used without any specific limitations. The same oil-soluble monomers which are used in the above process 1 can be used for the first method and the third method. However, to introduce as many ion exchange groups as possible and ensure sufficient mechanical strength, it is desirable to select at least one monomer from crosslinking monomers, such as divinylbenzene and ethylene glycol dimethacrylate, as a component of the oil-soluble monomer, and incorporate such a monomer in an amount of 10 to 90 mol%, preferably 12 to 80 mol% of the total amount of oil-soluble monomers. The oil-soluble monomer layer (b1) can be formed by coating an oil-soluble monomer onto the water-in-oil type emulsion layer (a1) or the polymer of the water-in-oil type emulsion layer (a2) at a predetermined thickness, for example, by dropping or casting, or by a method of using a coater such as a doctor knife, baker applicator, bar coater, or spin coater. In this instance, an optional amount of a polymer of oil - soluble monomers may be added to the oil-soluble monomer layer (b1) to increase the viscosity for ease of the coating operation. The thickness of the oil-soluble monomer layer (b1) may be arbitrary determined according to the thickness of the dense layer to be formed on the surface of the porous material, generally from the range of 1 to 1, 000 µm, and preferably 10 to 700 µm. The polymer film of the oil-soluble monomer layer (b2) used in the second method and the fourth method may be prepared by polymerizing the oil-soluble monomers containing said cross-linking monomers in a separate polymerization vessel in the form of a film or may be prepared by cutting or slicing a separately-produced polymer plate into a film. A polymerization conversion rate of 50% or more is sufficient for the polymerization of oil - soluble monomers. The thickness of the film may be appropriately determined from the range of 1 to 1,000 µm, and preferably 10 to 700 µm. To polymerize the laminate of (a) and (b), the vessel in which the laminate is filled is preferably used. The same polymerization conditions as used in the process 1 may be applied. A uniform, pinhole-free dense layer with an arbitrary thickness can be formed by the process 2.

The electrodeionization module used in an electrodeionization water purification unit device of the present invention comprises a bilayer ion exchanger plate consisting of a dense layer and a porous polymer or a three-layered ion exchanger plate consisting of two dense layers and a porous polymer, with the porous polymer being disposed between the dense layers, and a frame having a cation exchange membrane sealingly attached to the one side of the frame and an anion exchange membrane sealingly attached to the other side of the frame, thereby proving an internal space between the two membranes, wherein either of the above ion exchanger plate is packed in the internal space so that the dense layer and the ion exchange membrane may come into contact. These as such are used as an electrodeionization module. The following specific examples can be cited. Electrodeionization module 10 A shown in Fig. 1 formed from a composite porous ion exchanger 100 in the form of a plate, a frame 103, and a cation exchange membrane 101 sealingly attached to the one side of the frame 103, and an anion exchange membrane 102 sealingly attached to the other side of the frame 103, with the composite porous ion exchanger 100 being packed in the internal space 104 formed by the cation exchange membrane 101 and the anion exchange membrane 102. Electrodeionization module 10B shown in Fig. 2 formed from a composite porous ion exchanger 100a in the form of a plate, a frame 103a, a cation exchange membrane 101 sealingly attached to the one side of the frame 103a, a frame 103b, an intermediate ion exchange membrane 105 sealingly attached between the frame 103a and the frame 103b, with the composite porous ion exchanger 100a being packed in a first internal space 104a formed by the cation exchange membrane 101 and intermediate ion exchange membrane 105, a composite porous ion exchanger 100b in the form of a plate, an anion exchange membrane 102 sealingly attached to the other side of the frame 103b, with the composite porous ion exchanger 100b being packed in a second internal space 104b formed by the intermediate ion exchange membrane 105 and the anion exchange membrane 102. Electrodeionization module 10C shown in Fig. 3(A) formed from a plate 100c with a bilayer structure consisting of a dense layer 21a and a porous polymer 20a and a plate 100d with a bilayer structure, similar to the plate 100c, consisting of a dense layer 21b and a porous polymer 20b, with the plate 100c and the plate 100d are attached with the porous polymer sides being in contact with each other. Electrodeionization module 10D shown in Fig. 3(B) in the form of a three-layered plate 100e consisting of dense layers 21c and 21d, with a porous polymer 20c being disposed between them.

If a dense layer is formed on the surface of the composite porous ion exchanger, which is caused to come into contact with the ion exchange membrane, in Figs. 1 and 2, the composite porous ion exchanger and the ion exchange membrane are brought into a surface contact. This ensures remarkably easy transmission of ions and electrons and reduces electric resistances due to the contact of these components. In addition, if the dense layer formed on the surface of the composite porous ion exchanger, shown in Fig. 3, is caused to function as an ion exchange membrane forming an integral part of the composite porous ion exchanger, an electrodeionization module 10C or 10D without using a cation exchange membrane or an anion exchange membrane in this part can be obtained. Non-use of an ion exchange membrane reduces the number of components necessary for the electrodeionization water purification device and simplifies the assembly work. In addition, the integrality of the ion exchanger and the dense layer functioning as an ion exchange membrane decreases the electric resistance and lowers the operating cost. Furthermore, since the electrodeionization module of the present invention may be fabricated without using a frame by pasting an ion exchange membrane with a composite porous ion exchanger or by pasting two composite porous ion exchangers together using an adhesive, the work for assembly of the electrodeionization water purification device can be simplified.

There are no specific limitations to the types of the electrodeionization water purification device of the present invention. A plate-type, a cylinder-type, or a spiral-type may be adopted inasmuch as the devise is equipped with the above-described electrodeionization module and can electrically remove impurity ions adsorbed in the porous ion exchanger to produce deionized water. Cited as specific examples of the plate-type electrodeionization water purification device are a device having a depletion chamber, composed of a composite porous ion exchanger packed between a cation exchange membrane and an anion exchange membrane, concentrate chambers provided on both sides of the depletion chamber via the cation exchange membrane and the anion exchange membrane, and an anode and a cathode provided outside of each concentrate chamber; a device having a first small depletion chamber formed by a cation exchange membrane and an intermediate ion exchange membrane disposed between the cation exchange membrane and an anion exchange membrane, a second small depletion chamber formed by the intermediate ion exchange membrane and the anion exchange membrane, a depletion chamber composed of the first and second small depletion chamber, each packed with the composite porous ion exchanger, concentrate chambers provided on both sides of the depletion chamber via the cation exchange membrane and the anion exchange membrane, and an anode and a cathode provided outside of each concentrate chamber; a device having a depletion chamber, composed of a plate with a three-layered structure made from two dense layers having a composite porous ion exchanger disposed between them, one of the dense layers being a cationic dense layer and the other being an anionic dense layer, concentrate chambers provided on both sides of the depletion chamber, and an anode and a cathode provided on outside of each concentrate chamber; and the like.

An embodiment of the electrodeionization water purification device of the present invention will be explained with reference to Fig. 4. In Fig. 4, the numeral 1 indicates a depletion chamber and 2 indicates a concentrate chamber. Various modules are used for fabricating the depletion chamber 1. In this embodiment, an electrodeionization module 10A is formed by packing a composite porous amphoteric ion exchanger 100f, into which amphoteric ion exchange groups have been introduced, between an anion exchange membrane 102 and a cation exchange membrane 101. The electrodeionization module 10A used here comprises a bilayer ion exchanger plate consisting of a dense layer and a porous polymer or a three-layered ion exchanger plate consisting of two dense layers and a porous polymer, with the porous polymer being disposed between the dense layers, and a frame having a cation exchange membrane 101 sealingly attached to the one side of the frame and an anion exchange membrane 102 sealingly attached to the other side of the frame, thereby proving an internal space between the two ion exchange membranes, wherein either of the above ion exchanger plate is packed in the internal space so that the dense layer and the ion exchange membrane may come into contact. Multiple electrodeionization modules 10A may be installed with a space between them. A spacer (not shown) made of a water-sealing material such as a rubber packing in the form of a frame is disposed between one electrodeionization module 10A and another electrodeionization module 10A. The space formed by such a spacer forms a concentrate chamber 2. An anode 110 and a cathode 109 are respectively arranged on each side of the alternately arranged sequence body of depletion chambers 1 and concentrate chambers 2. Partition membranes 113 and 114 are installed respectively in the neighborhood of the anode 110 and the cathode 109, with the space between the partition membrane 113 and the anode 110 forming an anode chamber 111 and the space between the partition membrane 114 and the cathode 109 forming a cathode chamber 112. The composite porous amphoteric ion exchanger 100f is depicted in Fig. 4 as a separate body from the anion exchange membrane 102 and the cation exchange membrane 101. In the actual devices, however, the composite porous amphoteric ion exchanger 100f adheres to the anion exchange membrane 102 and the cation exchange membrane 101. The composite porous ion exchangers forming depletion chambers in the later-described Figs. 5 to 9 also adhere to the ion exchange membranes.

The electrodeionization water purification device shown in Fig. 4 is operated as follows. Water to be treated is introduced into the depletion chamber 1, concentrate water is introduced into the concentrate chamber 2, and electrode water is introduced into the anode chamber 111 and the cathode chamber 112. The same water as supplied to the depletion chamber 1 is usually used as concentrate water. A voltage is applied between the anode 110 and the cathode 109 to cause a direct current to flow perpendicularly to the flow of the water to be treated and concentrate water. When the water to be treated introduced into the depletion chamber 1 permeates through the continuous pore structure consisting of macropores and mesopores of the porous polymer, ions are adsorbed on the ion exchange groups in the continuous pore structure. The ions are discharged to the concentrate chamber 2 via the dense layers and the ion exchange membranes 101, 102.

Other embodiments of the electrodeionization water purification device of the present invention will be explained with ref erence to Figs. 5 to 9. The number of electrodeionization modules used is appropriately determined according to the capacity and use conditions of the process. Embodiments having two electrodeionization modules are shown in Figs. 5 to 9 for the purpose of simplicity of the drawings. The same symbols are given to the same components, for which the description is omitted, focusing the description on the components having different features. The embodiment shown in Fig. 5 differs from the embodiment shown in Fig. 4 in the use of different type of composite porous ion exchanger to form the electrodeionization module. Specifically, the electrodeionization module 10A used in the device of Fig. 5 is formed from a composite porous amphoteric ion exchanger 100f in which amphoteric ion exchange groups have been introduced, a composite porous cation exchangers 100g in which cation exchange groups have been introduced, and a composite porous anion exchangers 100h in which anion exchange groups have been introduced, each formed in the shape of a small block. These are laminated, from the inflow side of the water to be treated, in the order of the composite porous amphoteric ion exchanger 100f, composite porous cationic exchangers 100g, composite porous anionic exchangers 100h, composite porous cationic exchangers 100g, and composite porous anionic exchangers 100h. The laminated body is disposed between an anion exchange membrane 102 and a cation exchange membrane 101.

The embodiment shown in Fig. 6 differs from the embodiment shown in Fig. 4 in the use of different type of composite porous ion exchanger to form the electrodeionization module. Specifically, the electrodeionization module 10A used in the device of Fig. 6 is formed froma composite porous cation exchanger 100g and a composite porous anion exchanger 100h attached to each other, with the porous polymer sides having no dense layer facing vis-à-vis and the other sides facing an anion exchange membrane 102 and a cation exchange membrane 101, which sandwich the integrated ion exchanger body between them.

The embodiment shown in Fig. 7 differs from the embodiment shown in Fig. 4 in the use of different type of composite porous ion exchanger to form the electrodeionization module and in the use of two electrodeionization modules connected in series, one electrodeionization module serving in treating the water coming from the other electrodeionization module. Specifically, in the electrodeionization module 10A used in the device of Fig. 7, a composite porous cationic exchanger 100g in which cation exchange groups have been introduced and a composite porous anionic exchanger 100h in which anion exchange groups have been introduced are respectively disposed between an anion exchange membrane 102 and a cation exchange membrane 101, thereby forming an electrodeionization module 10A1 and an electrodeionization module 10A2, wherein the electrodeionization module 10A1 is designed to treat the water flowing from the electrodeionization module 10A2.

The electrodeionization module 10A shown in Fig. 1 can be used as the electrodeionization module for any devices shown in Figs. 4 to 7.

The electrodeionization module 10B shown in Fig. 2 can be used as the electrodeionization module for the device shown in Fig. 8. Specifically, in the device shown in Fig. 8, two small depletion chambers 1a, 1b are formed in the spaces partitioned by a cation exchange membrane 101 on the one side and an anion exchange membrane 102 on the other side, and an intermediate ion exchange membrane 105 disposed between the cation exchange membrane 101 and the anion exchange membrane 102. A composite porous ion exchanger or a laminate of a composite porous anion exchanger and a composite porous cation exchanger 100i is packed in the small depletion chamber 1b on the cation exchange membrane 101 side and a composite porous anion exchanger 100h is packed in the small depletion chamber 1a on the anion exchange membrane 102 side, thereby forming a depletion chamber 1. Concentrate chambers 2 are provided on both sides of the depletion chamber via the cation exchange membrane 101 and the anion exchange membrane 102 . The depletion chambers 1 and the concentrate chambers 2 are disposed between an anode 110 and a cathode 109. An anion exchange membrane is used as the intermediate ion exchange membrane 105 in this embodiment. It is desirable for the dense layer to be attached to the ion exchange membrane on the side in which the ion exchange groups have the same polarity as the ion exchange groups of the dense layer, thereby decreasing the electric resistance.

The electrodeionization water purification device shown in Fig. 8 is operated as follows. Water to be treated is introduced into the depletion chamber 1a. Then, the water from the depletion chamber 1a is introduced into the depletion chamber 1b installed next to the depletion chamber 1a, concentrate water is introduced into the concentrate chamber 2, and electrode water is introduced into the anode chamber 111 and the cathode chamber 112. The same water as supplied to the depletion chamber 1a is usually used as concentrate water. A voltage is applied between the anode 110 and the cathode 109 to cause a direct current to flow perpendicularly to the flow of the water to be treated and concentrate water. When the water to be treated which is introduced into the depletion chamber 1a permeates through the continuous pore structure consisting of macropores and mesopores of the composite porous anion exchanger 100h, ions are adsorbed on the ion exchange groups in the continuous pore structure and removed. Furthermore, the water from the depletion chamber 1a is treated through the continuous pore structure consisting of macropores and mesopores of the composite porous amphoteric ion exchanger or a laminate of the composite porous anion exchanger and composite porous cation exchanger 100i, whereby ions are adsorbed in the ion exchange groups in the continuous pore structure and removed. Concentrate water moves upward in the concentrate chambers, wherein the concentrate water absorbs impurity ions coming from the concentrate chamber through the cation exchange membrane 101 and anion exchange membrane 102 and discharged to outside the system as water containing high concentration impurity ions.

The electrodeionization module 10C shown in Fig. 3(A) can be used as the electrodeionization module for the device shown in Fig. 9. Specifically, the embodiment shown in Fig. 9 differs from that shown in Fig. 6 in that the embodiment of Fig. 9 does not use the cation exchange membrane 101 and the anion exchange membrane 102. Instead, the dense layer of the composite porous cation exchanger in this embodiment is provided with the function of a cation exchange membrane and the dense layer of the composite porous anion exchanger is provided with the function of an anion exchange membrane. The device with such a structure can exhibit the same effect as the electrodeionization water purification device shown in Fig. 6. In addi tion, omitting the use of ion exchange membranes can reduce components for the electrodeionization water purification device and simplify the fabrication work.

### EXAMPLES

The present invention will be described in more detail by examples , which should not be construed as limiting the present invention.

### Example 1

### (Preparation of composite porous cation exchanger)

Styrene (27.7 g), divinylbenzene (6.9 g), azobisisobutyronitrile (0.14 g), and sorbitan monooleate (3.8 g) were mixed and homogeneously dissolved. The mixture of styrene, divinylbenzene, azobisisobutyronitrile, and sorbitan monooleate was charged into deionized water (450 ml) and stirred in a homogenizer for 2 minutes at 20,000 rpm to obtain a water-in-oil type emulsion (water-in-oil type emulsion forming step). After the emulsification, the water-in-oil type emulsion was put into an autoclave made of stainless steel, of which the internal surface of the flat bottom is coated with polytetrafluoroethylene. The autoclave was sufficiently replaced with nitrogen and the emulsion was allowed to stand to polymerize at 60ºC for 24 hours. After the polymerization, the reaction mixture was extracted with isopropanol for 18 hours using a Soxhlet extractor to remove unreacted monomers and sorbitan monooleate, and dried overnight at 40°C under reduced pressure (drying step). Tetrachloroethane (500 g) was added to an aliquot (5 g) of the composite porous material of styrene/divinylbenzene copolymer (containing 14 mol% of cross-linking components) thus obtained. The mixture was heated at 60°C for 30 minutes. After cooling to room temperature, chlorosulfuric acid (25 g) was slowly added and the mixture was reacted at room temperature for 24 hours. After the reaction, acetic acid was added and the mixture was poured into a large amount of water, washed with water, anddriedtoobtainacomposite porous cation exchanger. The ion exchange capacity of the composite porous material was 4.0 mg equivalent/g on dry a basis. Sulfur atom mapping by EPMA confirmed that the composite porous material contained sulfonic acid groups uniformly dispersed. The SEM photograph shown in Fig. 10 confirms that the internal structure of the composite porous material has a continuous pore structure, in which a majority of macropores having an average diameter of 30 µm are layered and mesopores formed by layered macropores have an average diameter of 5 µm. On the other hand, inspection of a section near the surface of the composite porous material by SEM revealed that a dense layer with no holes and a thickness 1 to 5 µm was formed. The total pore volume of the porouspolymerportionwas 10.1 ml/g. Aspecimenwitha thickness of 10 mm was cut from the porous polymer portion of the porous material to measure the water flux rate. The porous polymer portion was confirmed to have an excellent water flux rate of 14,000 liters/min·m²·Mpa.

### Example 2

### (Preparation of composite porous anion exchanger)

A composite porous material of p-chloromethylstyrene /divinylbenzene copolymer (containing 50 mol% of cross-linking components) was prepared by carrying out the water-in-oil type emulsion forming step, polymerization step, and drying step in the same manner as in Example 1, except that p-chloromethylstyrene (18.0 g) was used instead of styrene (27 .7 g), and a different amount was used for divinylbenzene (17.3 g) and azobisisobutylonitrile (0.26 g). Dioxane (500 g) was added to an aliquot (5 g) of the porous material and the mixture was heated at 80°C for 30 minutes. After cooling to room temperature, an aqueous solution (65 g) of 30% trimethylamine was slowly added. The mixture was reacted for 3 hours at 50°C and then allowed to stand overnight at room temperature. After the reaction, the porous material was washed with acetone and dried to obtain a composite porous ion exchanger. The ion exchange capacity of the composite porous material was 2.5 mg equivalent/g on dry a basis. SIMS analysis confirmed that the composite porous material contained trimethylammonium groups uniformly dispersed therein. Inspection with SEM confirmed that the internal structure of the composite porous material hasacontinuousporestructure, in which a majority of macropores having an average diameter of 30 µm are layered and mesopores formed by layered macropores have an average diameter of 4 µm. On the other hand, inspection of a section near the surface of the composite porous material by SEM revealed that a dense layer with no holes and a thickness 1 to 3 µm was formed. The total pore volume of the porous polymer portion was 9.9 ml/g. A specimen with a thickness of 10 mm was cut from the porous polymer portion of the composite porous material to measure the water flux rate. The porous polymer portion was confirmed to have an excellent water flux rate of 12,000 liters/min^{.}m².Mpa.

### Example 3

### (Preparation of composite porous cation exchanger)

A water-in-oil type emulsion was obtained by carrying out the water- in-oil type emulsion forming step in the same manner as in Example 1. The obtained water-in-oil type emulsion (50 ml) was put into an autoclave made of stainless steel, with an internal space of 100 mm x 100 mm (bottom) x 10 mm (height). The autoclave was sufficiently replaced with nitrogen and the emulsion was allowed to stand to polymerize at 60ºC for 24 hours. A homogeneous solution of styrene (4. 0 g) , divinylbenzene (1.0 g), and azobisisobutylonitrile (0.06 g) was coated onto the entire surface of the porous material. Then, the porous material was placed in a container of which the internal atmosphere was sufficiently replaced with nitrogen, the container was sealed, and the coating was polymerized at 60ºC for 12 hours. After the polymerization, extraction and drying was carried out in the same manner as in Example 1 to obtain a composite porous material. The composite porous material was sulfonated in the same manner as in Example 1 to obtain a composite porous cation exchanger. The internal structure of the composite porous material was confirmed to have a continuous pore structure, in which a majority of macropores having an average diameter of 30 µm are layered and mesopores formed by layered macropores have an average diameter of 6 µm. On the other hand, inspection of a section near the surface of the composite porous material by SEM revealed that a dense layer with no holes and a thickness 30 µm was formed. The total pore volume of the porous polymer portion was 10.3 ml/g. A specimen with a thickness of 10 mm was cut from the porous polymer portion of the porous material to measure the water flux rate. The porous polymer portion was confirmed to have an excellent water flux rate of 15,000 liters/min^{.}m^{2.}Mpa.

### Comparative Example 1

A composite porous cation exchanger was prepared by carrying out the water-in-oil type emulsion forming step, polymerization step, and drying step in the same manner as in Example 1, except that potassium persulfate (0.60 g) was used insteadofazobisisobutylonitrile (0.14g) andadifferentamount of sorbitan monooleate (15.5 g instead of 3.8 g) was used. The ion exchange capacity of the obtained composite porous material was 4.0 mg equivalent/g on dry a basis. The porous polymer portion had a total pore volume of 9.2 ml/g, but had a small average diameter of mesopores of 0.2 µm. The porous polymer portion had a water flux rate only of 40 1/min^{.}m^{2.}Mpa.

### Example 4

### (Fabrication of electrodeionization module)

The composite porous ion exchangers obtained in Examples 1 and 2 were cut into pieces with a dimension of 100 mm x 100 mm x 4 mm. Composite porous cation exchangers and composite porous anion exchangers in the form of a plate, each consisting of a dense layer and porous polymer, were prepared. As schematically shown in Fig. 6, the two plates were caused to adhere with the porous polymer sides (the sides with no dense layer) face to face, and a dense layer containing cation exchange groups forming one side of the resulting plate and a dense layer containing anion exchange groups forming the other side. Thus, the electrodeionization module was formed by using only composite porous ion exchangers.

### Example 5

### (Fabrication and operation of electrodeionization water purification device)

An electrodeionization water purification device was fabricated using the electrodeionization module fabricated in Example 4. The electrodeionization water purification device consisted of one depletion chamber, one anode chamber, and one cathode chamber. The electrodeionization module was packed with the dense layer sides facing the electrodes so that the dense layers may function as ion exchange membranes integrated with the ion exchanger. Thus, no separate ion exchange membranes were used. A spacer was inserted respectively between the depletion chamber and the anode chamber and between the depletion chamber and the cathode chamber to form concentrate chambers. Water having a conductivity of 3.6 µS/cm obtained by treating city water with a reverse osmosis membrane was supplied to and treated by the electrodeionization water purification device. The electrodeionization water purification device was operated' at a current of 0.40 A to obtain treated water with a specific resistance of 5.0 M Ωcm. The operation voltage was 19 V.

### Comparative Example 2

Amberlite 120B and Amberlite 402BL were mixed at a ratio that each has the same ion exchange capacity (in equivalent) and the resulting mixture was used instead of the composite porous ion exchanger. An electrodeionization module was fabricated by packing the Amberlite mixture in an internal space formed by a cation exchange membrane sealingly attached to the one side of a frame and an anion exchange membrane sealingly attached to the other side of the frame. An electrodeionization water purification device was operated under the same conditions as in Example 4, except for using the electrodeionization module fabricated as above installed therein. Water having a conductivity of 3.6 µS/cm obtained by treating city water with a reverse osmosis membrane was supplied to and treated by the electrodeionization water purification device. The electrodeionization water purification device was operated at a current of 0.40 A to obtain treated water with a specific resistance of 5.0 M Ωcm. The operation voltage at this time was 30 V.

In comparison with the electrodeionization water purification device of Comparative 2, the device of Example 5, in which the composite porous ion exchanger was used as an ion exchanger, was confirmed to save electricity consumption by reducing the operation voltage.

### INDUSTRIAL APPLICABILITY

The structure of the composite ion exchanger of the present invention, comprising a dense layer functioning as an ion exchange membrane and a porous polymer functioning as an ion exchanger with an outstandingly large pore volume and specific surface area, integrally formed with the dense layer, is a novel structure quite different from the structure possessed by conventional particle-aggregation type porous materials. Therefore, if the composite porous ion exchanger is used as an electrodeionization module for the electrodeionization water purification device, a surface contact of the dense layer and the ion exchange membrane can be provided, and ions and electrons can be easily transmitted, resulting in a decrease in the electric resistance, which, in turn, leads to a low voltage operation to reduce power consumption.

## Claims

1. A composite porous ion exchanger with ion exchange groups uniformly dispersed therein and an ion exchange capacity of 0.5 mg equivalent/g or more on a dry basis, comprising a porous polymer having a continuous pore structure, which comprises interconnected macropores and mesoporeswith an average diameter of 1 to 1,000 µm existing on the walls of the interconnected macropores, having a total pore volume of 1 to 50 ml/g, and a dense layer covering at least one surface of the porous polymer and integrally formed with the porous polymer.

2. The composite porous ion exchanger according to claim 1, which is a plate-like two-layer body formed from the dense layer and the porous polymer, wherein macropores of the porous polymer form a water passage and the dense layer is made of the same polymer as the polymer forming the skeleton of the porous polymer and precludes permeation of water.

3. The composite porous ion exchanger according to claim 1, which is a plate-like three-layer body formed from two dense layers and one porous polymer sandwiched by the dense layers, wherein macropores of the porous polymer form a water passage and the dense layers are made of the same polymer as the polymer forming the skeleton of the porous polymer and preclude permeation of water.

4. A process for manufacturing a composite porous ion exchanger comprising a step of obtaining a water-in-oil type emulsion by mixing an oil-soluble monomer, not containing ion exchange groups, a surfactant, water, and a polymerization initiator, if necessary, a step of filling the water-in-oil type emulsion in a vessel, of which at least a part of the portion in contact with the water-in-oil type emulsion is made from a hydrophobic material, and polymerizing the water-in-oil type emulsion, and a step of introducing ion exchange groups into the polymer obtained in the previous step.

5. The process according to claim 4, wherein the water-in-oil type emulsion is filled in a vessel, of which at least the part is made from a hydrophobic material and allowed to stand, a continuous membrane of the oil-soluble monomer is formed on the surface of the hydrophobic material, and the monomer is polymerized.

6. A process for manufacturing a composite porous ion exchangercomprising: a step of obtaining a water-in-oil emulsion by mixing an oil-soluble monomer, not containing ion exchange groups, a surfactant, water, and a polymerization initiator, if necessary, a step of laminating (a) a layer of the water-in-oil type emulsion or a polymer of the water-in-oil type emulsion and (b) a layer of an oil-soluble monomer, not containing ion exchange groups, containing a polymerization initiator, if necessary, or a polymer film of the monomer, and polymerizing the laminate of the layers (a) and (b) , and a step of introducing ion exchange groups into the polymer obtained in the previous step.

7. The process according to claim 6, wherein the polymer of the water-in-oil emulsion layer (a) and the polymer film of the oil-soluble monomer layer (b) are respectively impregnated with an oil-soluble monomer not containing ion exchange groups.

8. An electrodeionization module used in an electrodeionization water purification device comprising a frame having a cation exchange membrane sealingly attached to the one side of the frame and an anion exchange membrane sealingly attached to the other side of the frame and the composite porous ion exchanger according any one of the claims 1 to 3 packed in the space formed by the cation exchange membrane and the anion exchange membrane so that said dense layer and said ion exchange membrane may be in contact with each other.

9. An electrodeionization module used in an electrodeionization water purification device comprised of the composite porous ion exchanger according any one of the claims 1 to 3, wherein said one dense layer is used as a cation exchange membrane, said another dense layer is used as an anion exchange membrane, and said porous polymer is used as an ion exchanger.

10. An electrodeionization water purification device equipped with the electrodeionization module according to claim 8.

11. An electrodeionization water purification device equipped with the electrodeionization module according to claim 9.
